Europäisches Patentamt

European Patent Office

Office européen des brevets

(19)

(11) Veröffentlichungsnummer: **0 133 635**
**B1**

(12) **EUROPÄISCHE PATENTSCHRIFT**

(45) Veröffentlichungstag der Patentschrift:
**04.11.87**

(51) Int. Cl.⁴: **H 04 N 5/33**

(21) Anmeldenummer: **84100989.7**

(22) Anmeldetag: **01.02.84**

(54) **Wärmebildgerät.**

(30) Priorität: **16.08.83 CH 4461/83**

(43) Veröffentlichungstag der Anmeldung:
**06.03.85 Patentblatt 85/10**

(45) Bekanntmachung des Hinweises auf die Patenterteilung:
**04.11.87 Patentblatt 87/45**

(84) Benannte Vertragsstaaten:
**CH DE FR GB LI NL**

(56) Entgegenhaltungen:
**EP-A-0 003 600**
**US-A-4 338 627**

(73) Patentinhaber: **SIEMENS- ALBIS
AKTIENGESELLSCHAFT, EGA1/Verträge und
Patente Postfach, CH- 8047 Zürich (CH)**

(72) Erfinder: **Fosco, Guido, Langäckerstrasse 1, CH-
8957 Spreitenbach (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die vorliegende Erfindung betrifft ein Wärmebildgerät gemäss dem Oberbegriff des Patentanspruchs 1.

Aus der EP-PS-0 003 600 ist ein Wärmebildgerät dieser Art bekannt, bei dem die von der Reihe der Einzelelemente des Detektors kommenden Signale auf zwei benachbarte Reihen von Leuchtdioden aufgeschaltet werden, wobei der Abstand zwischen den beiden Leuchtdiodenreihen entsprechend dem Phasenfehler eingestellt wird. In diesem Wärmebildgerät können die Leuchtdioden quadratisch oder rechteckig ausgeführt sein, weil sie beliebige, beispieisweis herstellungsbedingte Umrisse haben können. Derartige Wärmebildgeräte sind speziell zur Kompensation des Phasenfehlers, der normalerweise bei der Übertragung von Signalsprüngen auftritt, vorgesehen.

Wärmebildgeräte der eingangs erwähnten Art weisen jedoch einen relativ schlechten Kontrast auf, der nicht ohne weiteres durch bekannte Massnahmen behebbar ist. Aufgabe der vorliegenden Erfindung ist es, ein Wärmebildgerät mit einem verbesserten Kontrast anzugeben. Die Lösung dieser Aufgabe wird durch die im kennzeichnenden Teil des Patentanspruches 1 angegebenen Massnahmen erreicht. Vorteilhafte Ausgestaltungen der Erfindung sind in weiteren Ansprüchen angegeben.

Im foigenden wird ein Ausführungsbeispiel der Erfindung anhand von Zeichnungen näher beschrieben. Es zeigt:

Fig. 1 das Blockschaltbild eines erfindungsgemässen Wärmebildgerätes,

Fig. 2 eine schematische Darstellung der Detektorelemente und der Leuchtdiodenelemente und

Fig. 3 die Übertragungscharakteristik des Impulsfilters eines solchen Wärmebildgerätes.

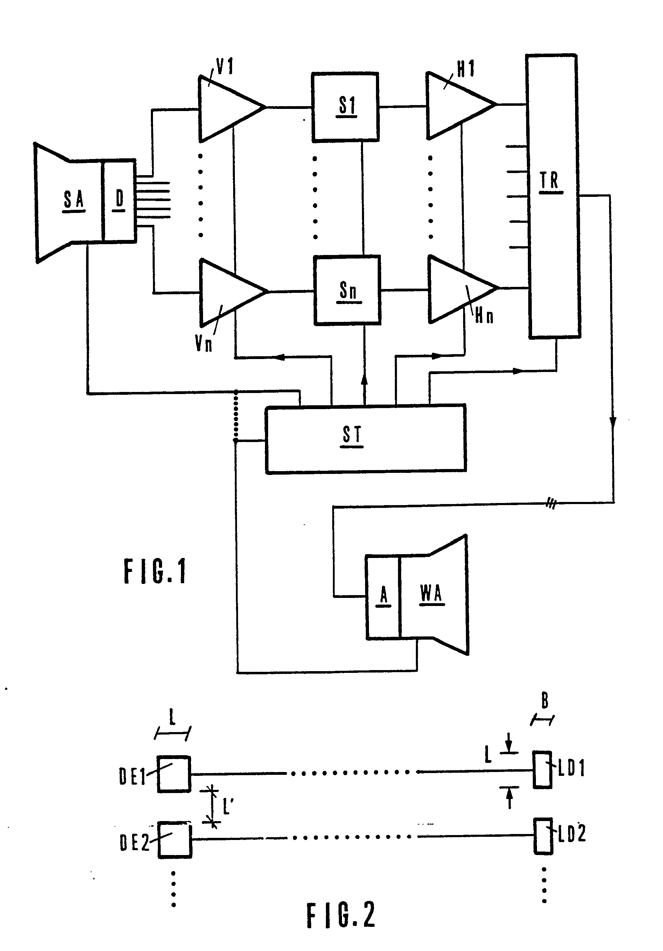

Das Wärmebildgerät nach Fig. 1 weist einen Sensorabtaster SA mit einem tiefgekühlten Detektor D auf, der eine Anzahl n monolithische Detektorelemente umfasst, wobei jedes Detektorelement über die Reihenschaltung einer Verstärkerschaltung V1...Vn, eines Schalters S1...Sn und eines Verstärkers H1...Hn mit einem Treiber verbunden ist. Diese Treiber die eine Treiberschaltung TR bilden, sind jeweils über eine n-Draht-Leitung an je ein monolithisches Leuchtdiodenelementangeschlossen. Solche Leuchtdiodenelemente bilden eine Leuchtdiodenanordnung A, die durch einen Wiedergabeabtaster WA abgetastet wird. Beide Abtaster SA und WA sind entweder mechanisch oder durch eine Steuerschaltung ST synchronisiert, die zudem die Verstärkerschaltungen V1...Vn, die Schalter S1...Sn, die Verstärker H1...Hn und die Treiberschaltung TR steuert und erforderlichenfalls ihre Arbeitsweise überwacht. Die Verstärker H1...Hn können auch entfallen.

In Fig. 2 bilden sowohl die monolithischen Detektorelemente DE1, DE2 ... als auch die monolithischen Leuchtdiodenelemente LD1, LD2. .. je eine Zeile, wobei zwischen den Eiementen jeweils ein Abstand $L' = F(n)$ besteht. Dabei bilden die Detektorelemente DE1, DE2 ... Quadrate der Länge L und die Leuchtdiodenelemente LD1, LD2 ... Rechtecke der Breite $B < L$ in der Abtastrichtung und der Länge L in der anderen Richtung.

Das Wärmebildgerät nach Fig. 1 und 2 funktioniert folgendermassen:

Die abgetastete Wärmestrahlung wird in bekannter Weise auf den Detektor D projiziert, dessen Detektorelemente die einfallende Wärmestrahlung in elektrische Signale umwandeln, die durch die Verstärker V1 ..Vn und H1...Hn verstärkt werden. Diese Signale, die zusätzlich durch die Treiber der Treiberschaltung TR verstärkt werden, gelangen schliesslich zu den Leuchtdiodenelementen der Leuchtdiodenanordnung A, die somit zeilen- und/oder reihenmässig derart leuchten, dass ein sichtbares Bild durch den Wiedergabeabtaster WA wahrnehmbar ist. Die Schalter S1...Sn unterbrechen die Signalleitung während den horizontalen und/oder gegebenenfalls vertikalen Totzeiten der Abtaster. Dadurch, dass die Bedingung $B < L$ erfüllt ist, kann der Spannungsverlauf am Detektorausgang durch die Leuchtdiodenelemente genauer in einen optischen Intensitätsverkauf umgewandelt werden, als wenn die Bedingung $B = L$ erfüllt wäre. Dasselbe Resultat kann erreicht werden, wenn zwischen den Leuchtdiodenelementen und dem Wiedergabeabtaster WA eine oder mehrere Zylinderlinsen eingefügt werden, durch die eine anamorphotische Verringerung der wirksamen Breite der monolithischen Leuchtdiodenelemente bewirkt wird.

Die Verstärker H1...Hn sind extern über die Steuerschaltung ST einstellbar. Die Verstärkerschaltungen V1...Vn weisen eine Impulsfiltercharakteristik auf (Vgl. z. B. Seite 45 im Buch "Pulse, Digital and Switching Waveformes" von Milman and Taub, Mc Graw-Hill 1965). Eine solche Verstärkerschaltung kann durch die Reihenschaltung eines Verstärkers und eines Impulsfilters realisiert werden, das einen teilweise linear mit der Frequenz ansteigenden Phasengang bzw. eine zumindest angenähert konstante Gruppenlaufzeit aufweist. Ein solcher Impulsfilter kann beispielsweise durch die Reihenschaltung eines Allpasses und eines Tiefpasses realisiert werden, wobei die Tiefpässe eine Anhebung in der Frequenzcharakteristik aufweisen. Diese Anhebung der Übertragungsfunktion kann bei der Grenzfrequenz der resultierenden Übertragungsfunktion aller anderen Elemente ohne Impulsfilter gewählt werden.

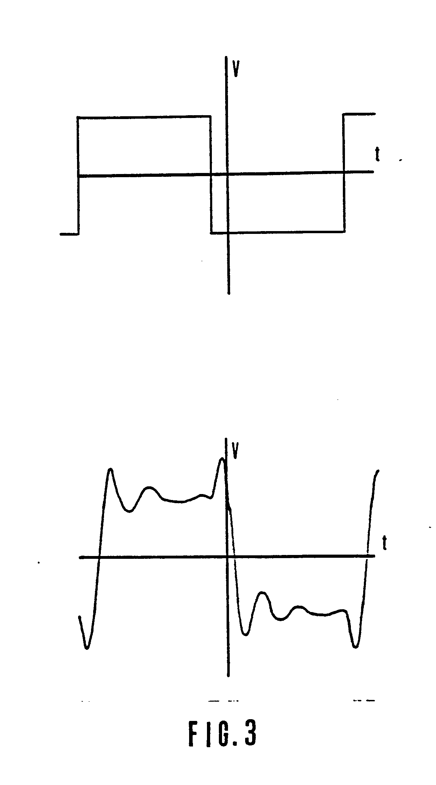

In Fig. 3 oben ist das Eingangssignal und unten das resultierende Ausgangssignal einer solchen Verstärkerschaltung mit Impulsfiltercharakteristik dargestellt, die zusammen mit der Bedingung B < L eine beträchtiiche Verbesserung des Kontrastes mit sich bringt.

**Patentansprüche**

1. Wärmebildgerät mit einem Sensorabtaster (SA), der die von beobachteten Objekten einfallende Wärmestrahlung auf Detektorelemente projiziert, welche elektrische Signale abgeben, die jeweils über mindestens eine Verstärkerschaltung (V1...Vn) einer Leuchtdiodenanordnung (A) zugeführt werden, deren Leuchtdiodenelementen durch einen Wiedergabeabtaster (WA) ein sichtbares Bild der Objekte entnehmbar ist, wobei die Breite (B) der wirksamen Leuchtfläche der einzeinen Leuchtdiodenelemente (LD1, LD2...) in der Abtastrichtung kleiner als die Länge (L) in der dazu senkrechten Richtung ist, dadurch gekennzeichnet, dass die Verstärkerschaltungen (V1, V2, ...) jeweils ein Korrekturfilter umfasst, das einen teilweise linear mit der Frequenz ansteigenden Phasengang und eine zumindest angenähert konstante Gruppenlaufzeit aufweist.

2. Wärmebildgerät mit einem Sensorabtaster (SA), der die von beobachteten Objekten einfallende Wärmestrahlung auf Detektorelemente projiziert, welche elektrische Signale abgeben, die jeweils über mindestens eine Verstärkerschaltung (V1...Vn) einer Leuchtdiodenanordnung (A) zugeführt werden, deren Leuchtdiodenelementen durch einen Wiedergabetaster (WA) ein sichtbares Bild der Objekte entnehmbar ist, wobei die Breite (B) der wirksamen Leuchtfläche der einzelnen Leuchtdiodenelemente (LD1, LD2...) in der Abtastrichtung kleiner alis die Länge (L) in der dazu senkrechten Richtung ist, dadurch gekennzeichnet, dass die Verstärkerschaltungen (V1, V2,...) jeweils ein Korrekturfilter mit einer Übertragungscharakteristik umfassen, die ein relativ starkes Überschwingen (Fig. 3) sowohl auf der positiven als auch auf der negativen Seite jeder ansteigenden und jeder fallenden Flanke eines Impulses ergibt.

3. Wärmebildgerät nach Anspruch 1 oder 2, dadurch gekennzeichnet, dass die wirksame Leuchtfläche derart ausgestaltet ist, dass die Leuchtdiodenelemente (LD1, LD2 ...) selbst Rechtecke der Breite (B) und der Länge (L) sind, wobei die Bedingung (B) kleiner als (L) gilt.

4. Wärmebildgerät nach Anspruch 1 oder 2, dadurch gekennzeichnet, dass die wirksame Leuchtfläche anamorphotisch mit optischen Mitteln erzeugt ist.

5. Wärmebildgerät nach Anspruch 1 oder 2, dadurch gekennzeichnet, dass die Verstärkerschaltungen jeweils durch die Reihenschaltung eines Verstärkers und eines Impulsfilters gebildet sind.

6. Wärmebildgerät nach Anspruch 5, dadurch gekennzeichnet, dass die Impulsfilter jeweils durch die Reihenschaltung eines Allpasses und eines Tiefpasses gebildet sind.

7. Wärmebildgerät nach Anspruch 6, dadurch gekennzeichnet, dass die Tiefpässe eine Anhebung in der Frequenzcharakteristik gegen die Grenzfrequenz hin aufweisen.

8. Wärmebildgerät nach einem der Ansprüche 1 bis 7, dadurch gekennzeichnet, dass in Reihe mit den einzelnen Verstärkerschaitungen (V1, V2 jeweils ein Schalter (S1, S2...) vorgesehen ist, der während der Totzeiten der Abtaster den jeweiligen Stromfluss unterbricht.

**Claims**

1. A heat image device comprising a sensor scanner (SA) which projects heat radiation received from observed objects onto detector elements which emit electrical signals, each of which is supplied via at least one amplifier circuit (V1...Vn) to a luminescence diode arrangement (A), from the luminescence diode elements of which a visible image of the objects can be obtained by a reproduction scanner (WA), where the breadth (B) of the active luminescent surface of the individual luminescence diode elements (LD1, LD2...) is smaller in the scanning direction than the length (L) in the direction at right angles thereto, characterised in that the amplifier circuits (V1, V2,...) each include a correction filter having a phase response which rises partially linearly with the frequency, and an at least approximately constant group delay time.

2. A heat image device comprising a sensor scanner (SA) which projects heat radiation received from observed objects onto detector elements which emit electrical signals, each of which is supplied via at least one amplifier circuit (V1...Vn) to a luminescence diode arrangement (A), from whose luminescence diode elements a visible image of the objects can be obtained by a reproduction scanner (WA), where the breadth (B) of the active luminescent surface of the individual luminescence diode elements (LD1, LD2...) is smaller in the scanning direction than the length (L) in the direction at right angles thereto, characterised in that the amplifier circuits (V1, V2,...) each include a correction filter which has a transmission characteristic which results in relatively strong overshooting (Fig. 3) both on the positive and the negative side of the rising and the falling flank of each pulse.

3. A heat image device as claimed in Claims 1 or 2, characterised in that the design of the active luminescent surface is such that the luminescence diode elements (LD1, LD2...) are themselves rectangles having a breadth (B) and a length (L), where (B) is smaller than (L).

4. A heat image device as claimed in Claims 1 or 2, characterised in that the active luminescent surface is produced anamorphotically using optical means.

5. A heat image device as claimed in Claims 1 or 2, characterised in that the amplifier circuits are each formed by the series arrangement of an amplifier and a pulse filter.

6. A heat image device as claimed in Claim 5, <u>characterised in that</u> the pulse filters are each formed by the series arrangement of an all-pass filter and a low-pass filter.

7. A heat image device as claimed in Claim 6, <u>characterised in that</u> the frequency characteristic of the low-pass filters increases in the direction of the cut-off frequency.

8. A heat image device as claimed in one of Claims 1 to 7, <u>characterised in that</u> the individual amplifier circuits (V1, V2...) are each arranged in series with a switch (S1, S2...) which interrupts the respective current flow during the idle times of the scanners.

**Revendications**

1. Appareil de thermographie avec un dispositif de balayage de détecteurs (SA) qui projette le rayonnement thermique issu d'objets examinés sur des éléments-détecteurs qui émettent des signaux électriques qui sont respectivement transmis, par l'intermédiaire d'au moins un circuit d'amplificateurs (V1 ... Vn), à un dispositif à diodes électroluminescentes (A), à partir des éléments à diodes électroluminescentes duquel on peut prélever, à l'aide d'un dispositif de balayage à la restitution (WA), une image visible de l'objet, la largeur (B) de la surface luminescente efficace des différents éléments à diodes électroluminescentes (LD1, LD2...) étant, dans le sens du balayage plus faible que la largeur (L) dans le sens perpendiculaire au précédent, caractérisé par le fait que les circuits d'amplificateurs (V1, V2...) comprennent chacun un filtre de correction qui présente une caractéristique phase-fréquence qui croît partiellement de façon linéaire avec la fréquence et une durée de propagation de groupe qui est au moins approximativement constante.

2. Appareil de thermographie avec un dispositif de balayage de détecteurs (SA) qui projette le rayonnement thermique issu d'objets examinés sur des éléments-détecteurs qui émettent des signaux électriques qui sont respectivement transmis, par l'intermédiaire d'au moins un circuit d'amplificateurs (V1...Vn), à un dispositif à diodes électroluminescentes (A), à partir des éléments à diodes électroluminescentes duquel on peut prélever, à l'aide d'un dispositif de balayage à la restitution (WA), une image visible de l'objet, la largeur (B) de la surface luminescente efficace des différents éléments à diodes électroluminescentes (LD1, LD2...) étant, dans le sens du balayage plus faible que la largeur (L) dans le sens perpendiculaire au précédent, caractérisé par le fait que les circuits amplificateurs (V1, V2,..) comportent chacun un filtre de correction avec une caractéristique de transfert qui a pour conséquence une suroscillation relativement forte (figure 3) aussi bien du côté positif que du côté négatif de chaque flanc croissant et décroissant d'une impulsion.

3. Appareil de thermographie selon la revendication 1 ou 2, caractérisé par le fait que la surface luminescente efficace est conformée de telle façon que les éléments de diodes luminescentes (LD1, LD2...) sont eux-mêmes des rectangles d'une largeur (B) et d'une longueur (L), avec la condition que (B) est inférieur à (L).

4. Appareil de thermographie selon la revendication 1 ou 2, caractérisé par le fait que la surface luminescente efficace est produite par voie anamorphotique, à l'aide de moyens optiques.

5. Appareil de thermographie selon la revendication 1 ou 2, caractérisé par le fait que les circuits amplificateurs sont chacun formés par un circuit série d'un amplificateur et d'un filtre d'impulsions.

6. Appareil de thermographie selon la revendication 5, caractérisé par le fait que les filtres d'impulsions sont chacun constitués par le montage série d'un filtre passe-tout et d'un filtre passe-bas.

7. Appareil de thermographie selon la revendication 6, caractérisé par le fait que les filtres passe-bas présentent un relèvement de la caractéristique de la fréquence vers la fréquence limite.

8. Appareil de thermographie selon l'une des revendications 1 à 7, caractérisé par le fait que l'on prévoit, en série avec les différents circuits amplificateurs (V1, V2...),respectivement un interrupteur (S1, S2...) qui interrompt le passage du courant pendant les temps morts des dispositifs de balayage.

F I G.1

F I G.2

FIG. 3